# EUROPEAN PATENT APPLICATION

(11) **EP 1 696 338 A1**
(43) Date of publication of application: **30.08.2006**
(21) Application number: 04766890.0
(22) Date of filing: 28.07.2004
(51) Int. Cl.: G06F 17/28, G06F 3/16, H04Q 7/32

(54) **INDIVIDUAL SIMULTANEOUS TRANSLATOR**

(30) Priority: 16.12.2003 ES 200302965; 27.01.2004 ES 200400172
(71) Applicant: MATERIALIZACION DE IDEAS S.L., 26500 Calahorra (ES)
(72) Inventor: SANTORROMAN BLAZQUEZ, Leopoldo, E-26500 Calahorra (ES)
(74) Representative: Alvarez Lopez, Laura Gema
(86) International application number: PCT/ES2004/000351
(87) International publication number: WO 2005/062200

(57) **Abstract**

The invention relates to a device which serves as both a simultaneous translator and a mobile telephone. The inventive device comprises a control module (6) for receiving oral information from (i) a module (7) which is used for the recognition and filtering of the dominant conversation in the area surrounding the device and (ii) a module (8) corresponding to the actual mobile telephone. In both cases, the control module (6), together with a multi-language translation module (9), converts the information received from the aforementioned modules (7 and 8) into the language of the user of the device. Optionally, the multi-language translation module (9) can be independent of the structure of the device and housed in a remote information-supply centre (11) such as to communicate with multiple individual translators. In addition to acting on incoming speech, said multi-language translation module (9) can also act simultaneously on outgoing speech, such that the information supplied by the user reaches the other interlocutor in his/her own language.

## Description

### PURPOSE OF THE INVENTION

This invention refers to a simultaneous translation device, especially designed for personal use, compact and portable, and which in its simplest version is capable of translating the information you receive in a determined language into another, also predetermined, language, although the most sophisticated version allows you to select between several input languages as well as several output languages. Thus, the purpose of the invention is a device capable of receiving spoken information, either directly or through a telephone line, in a language unknown to the user of the device, translating said information into another language which is intelligible to the user of said device, having great versatility inasmuch as translations can be multidirectional.

The device can carry the information corresponding to the dictionary or dictionaries necessary to fulfil its function, or may receive said information remotely, from a remote translation module, so that said module can be used by several users at the same time

### HISTORY OF THE INVENTION

All aspects of international exchanges - political, social, technical, economic and cultural, and their constant intensification, make language skills ever more necessary for relationships with people from different cultures.

Learning languages is no easy task, and in many cases is affected by poor personal aptitude, lack of time or opportunity, professional or employment incompatibility or other very diverse causes, in such a way that the majority of the population go no further than mastering their own language, thus missing out on important training opportunities, the transfer of knowledge and personal skills, which are restricted, harmed or lost definitively due to the impossibility of fluid communication in a language, to the consequent detriment of all.

Language skills are particularly necessary for travelling, face to face or telephone conversations and conferences or meetings.

To date, and only when the situation justifies taking on significant costs, specialised translators are used for simultaneous translation of the comments of one person in a determined language so that the message can be received and understood by those people who do not know the language of the speaker.

It is evidently difficult to get hold of people capable of carrying out this type of simultaneous translation, and is a solution within the reach of very few.

### DESCRIPTION OF THE INVENTION

The personal simultaneous translator is designed as a fully satisfactory method of resolving the problem discussed above, in the form of a simple device which can eliminate the dependency on simultaneous translators who have to act ''in situ", and at a much more accessible cost, and even allowing the user to select several languages, as we mentioned above.

The simultaneous translator, which can be incorporated into any design, basically that of a translation device, will preferably incorporate the technology corresponding to a mobile phone, with the necessary additions to make it suitable for simultaneous translation, in such a way that this new phone can pick up the conversation at the highest tone in the surroundings, at the same time automatically identifying the language spoken, simultaneously translating it into another previously selected language and providing said information in the new language to the telephone user, remaining set to pick up direct sound levels until a telephone call is made, which will have priority over the pick up of direct sound, and with effects similar to the first case, that is to say giving a simultaneous translation when the call is in a different language to that spoken or understood by the user of the simultaneous translator.

However, in line with another possibility of the invention, it has been planned that the aforementioned priority for telephone calls may be selected by the translator user, that is to say that at any time it is the user who decides if the direct conversation or telephone call takes priority, and in such a way that when the user give priority to the direct conversation, any calls will be logged conventionally, as happens currently with mobile phones.

Thus, and in accordance with that described above, the new device will integrate any conventional type of mobile phone, such as for example GSM, GPRS, UMTS etc., duly connected to a control module which receives information from a module for the recognition and filtration of the dominant language, as well as a multiple language translation module, which will be linked with different dictionaries or language sub modules, one for each language which will be used with the translator.

Nevertheless, it has been planned that said multiple language translation module, with its corresponding dictionaries, will be remote from the invention itself, remaining stable in any remote location, to which the device can be connected at any time using the same GSM, GPRS, UMTS system, etc. as those used in mobile phones.

In this way, a double objective is attained, on the one hand significantly reducing the amount of information the device must carry, with the large amount of information contained in the multiple dictionaries mentioned being kept remotely, and on the other hand said information is available to more than one personal translator, so multiple devices can simultaneously connect to a common central service where the dictionary control module is located.

In line with the other characteristics of the invention, the possibility has been provided for that the translator, during the telephone call, can also act simultaneously as a translator of the outgoing conversation, that is to say the conversation in the language of the user of the opposite receiver, in such a way that not only can the user understood the speaker, but can also be understood by him if the language is not known.

### DESCRIPTION OF THE DRAWINGS

To complement the description given, and so as to help with a better understanding of the characteristics of the invention, in line with an early example of same, an integral part of said description is a set of drawings which will represent the following, for illustrative and non limitative purposes:
Figure 1: Shows, using a diagrammatic representation in perspective, an example of a practical model of a personal simultaneous translator, created in line with the purpose of this invention.
Figure 2: Shows a basic block diagram corresponding to the simultaneous translator in the previous figure, in line with a first variation, in which the multiple language translation model is integrated into the device itself.
Figure 3: Shows a block diagram similar to the previous figure, but showing a second variation in which the multiple language translation module is kept removed from the device.

### PREFERRED MODEL OF THE INVENTION

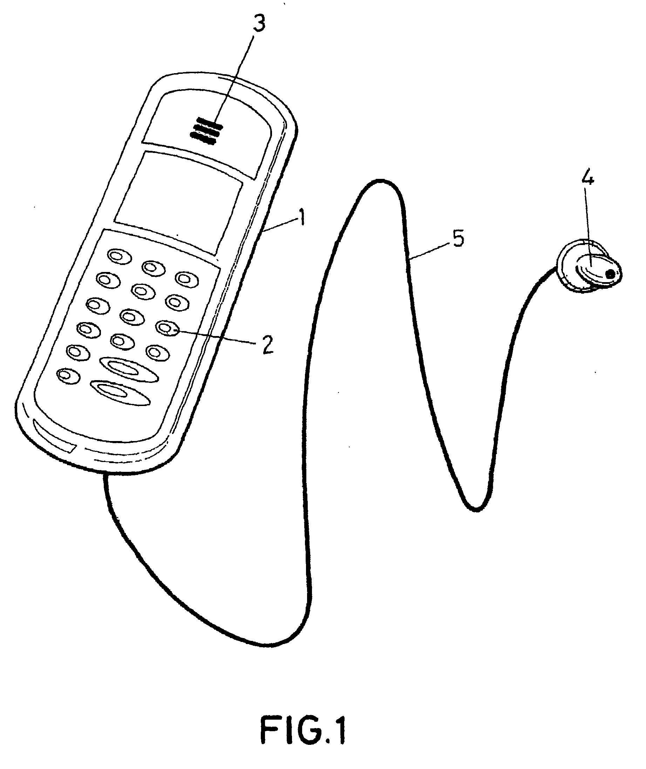

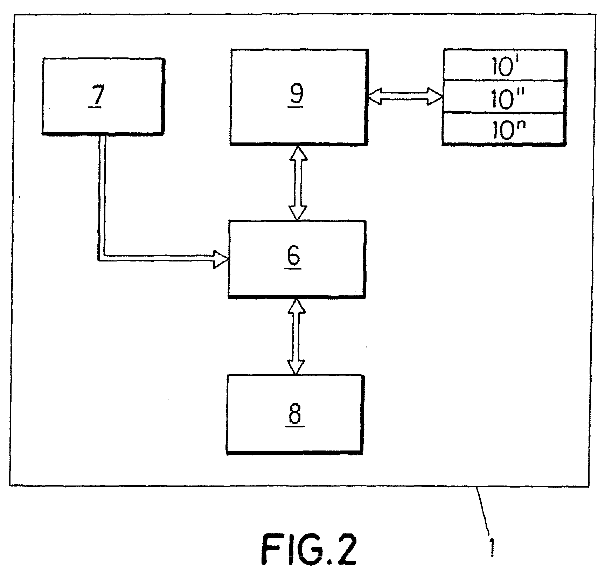

In the figures indicated, specifically figures 1 and 2, there is a personal simultaneous translator comprising a casing (1) of similar size and configuration to a mobile phone, with the corresponding key pad (2), microphone (3) and earpiece (4), this latter conveniently remote from the casing (1) and linked to same via a wire (5) to enable, as well the connection of the earpiece (4) to one of the user's ears, the casing (1) to be clipped Lo any part of the user, for example the belt, a shirt pocket etc.

Inside the casing (1), and according to the diagram in figure 2, there is a control module (6) capable of receiving two types of audio sources, one corresponding to direct or ambient voices near the device, through a module (7) for recognition and filtration of the direct and dominant conversation, for example for someone participating in a conference, someone who is speaking in front of a user of the translator, etc., but the control module (6) can also receive oral information through the module itself (8) from the mobile phone when it receives a phone call, this incoming call having priority over the pick up of direct or Ambiental input in the module (7), that is to say automatically connecting the module (8) when there is a telephone call, and then returning to its disconnected status, also automatically, with the new connection of the Ambiental or direct module (7) when the call stops.

One variation of the invention also provides, compared with the permanent priority of the mobile phone module (8) over the module (7) for filtration and recognition of the direct and dominant conversation, that this priority can be selected by the user of the telephone-translator, in such a way that when circumstances make it advisable, for example during a conference or a direct conversation with a speaker, that the telephone module (8) will lose its priority, and any call will merely be logged or recorded by voice mail, to be dealt with subsequently.

In any event, the control module (6) is also assisted by a multiple language translation module (9), which can incorporate its own dictionary or be assisted, such as in the example represented in figure 2, with a range of dictionaries (10'), (10"), (10ⁿ) usable selectively by respective languages, and whose number may be even as great as than the functional capacity planned for the simultaneous translator.

In line with that described above, and in line with the most simple variation of the translator, the translation module (9) will incorporate a single dictionary (10), such as English for example, in such a way that if the user of the simultaneous translator only knows Spanish, both the information in English received through the module (7), as well as through the module (8) will finally reach said user through the earpiece (4) in Spanish.

More sophisticated devices provide for several languages or dictionaries (10'), (10"), (10ⁿ), in such a way that a Spanish user can use the simultaneous translator for English when in a country using this language, or select other languages such as French, German etc. when in other countries or meeting with people who speak different languages, in any event reaching, obviously by the use of reciprocal simultaneous translators, a perfect understanding between two or more persons, despite the fact that none of them know the language the rest are speaking.

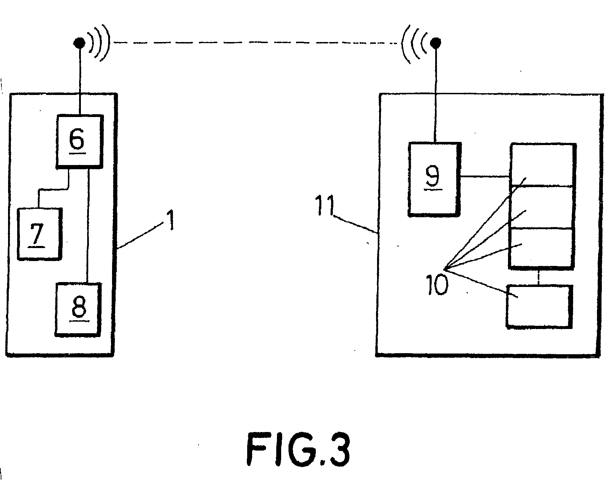

In the variation in figure 3, the device (1) will exclusively incorporate the control model (6) capable of receiving two types of audio sources, one corresponding to ambient voice near the device, through a module (7) for the filtration and recognition of the direct and dominant conversation, for example a conference speaker, some one is speaking to the user of the device, etc. and another through the mobile telephone module (8) itself, while other system elements, that is to say the multiple language translation module (9), with its corresponding dictionaries (10), (10'), (10"), ..., and (10ⁿ) relating to different languages and usable selectively, removed from the translation device (1) and able to be set up in a remote centre (11) for the supply of information, which, using the same communications channels as a the mobile phone, such as for example the aforementioned GSM, GPRS, UMTS etc., enable the user of the device (1) to receive at any time the information from this unit (11) in the language corresponding to any of the dictionaries (10) available.

Evidently, this option provides for bigger and more numerous dictionaries than in figure 2, without the problem of data storage within the translation device itself, also meaning the information used can be used simultaneously by many users.

As a complement, and in line with other characteristics of the invention, it has been planned that the control module (6) does not only act on incoming information, so that through the translation model (9), with its corresponding dictionaries (10), the user of the translator can receive any conversation in his own language, but also said control model (6) can act in the same way on outgoing information, that is to say the multiple language module (9) also acts on said outgoing information or conversation, so that at the same time said outgoing information will reach the recipient, for example when at the other end of the telephone, in the same language he is using, in these way enabling both the translator user and the speaker to use their respective languages and receive incoming messages also in their own language.

## Claims

1. Simultaneous personal translator, especially designed so that the user of same can receive in their own language any message spoken in a different language, **characterised by** incorporating, within the casing (1), preferably equivalent to that of any conventional mobile phone, a control model (6) assisted by a multiple language translation module (9) in such a way that said control module (6) is capable of translating the oral message received by the translator in any of the languages (10'), (10") and (10ⁿ) planned as complementary dictionaries in the multiple language translation module (9), into the language of the translator user, who will receive same through the earpiece (4) of the device.

2. Simultaneous personal translator, according to claim 1, **characterised by** having the control module (6) assisted by a module (7) for recognition and filtration of the dominant conversation near the device, a module (7) capable of distinguishing the predominant sound in the environment from other sounds and identifying the language to which said dominant conversation corresponds.

3. Simultaneous personal translator, according to claim 1, **characterised by** having the control module (6) assisted by a mobile phone module (8), in such a way that the translator acts simultaneously as a mobile phone, with the feature that when an incoming call arrives in a language different to that of the user, the control module (6) will identify said call and simultaneously translate the contents of the call so it can reach the user of the translator in its own language.

4. Simultaneous personal translator, according to previous claims, **characterised by** having the mobile phone module (8) with priority over the module (7) for recognition and filtration of the dominant ambient conversation, in such a way that when the module is connected (7), this leads to automatic disconnection of same and the automatic connection of the telephone module (8) when a telephone call is received, also automatically inverting the functional position of said modules (7) and (8) when interrupting the telephone call.

5. Simultaneous personal translator, according to previous claims, **characterised by** having a multiple language translation module (9) together with the dictionaries (10'), (10"), ..., (10ⁿ) which assist it, physically separate from the personal translation device (1) and located in a remote location, preferably an information supply centre (11), continuously accessible by various personal translators (1) through any suitable wireless communication system such as GSM, GPRS, UMTS or other.

6. Simultaneous personal translator, according to previous claims, **characterised by** having the module (7) priority for recognition and filtration of the direct and dominant conversation with respect to the module (8) of the mobile phone and vice versa, selectable by the user of the simultaneous translator.

7. Simultaneous personal translator, according to previous claims, **characterised by** having the control module (6), through the multiple language module (9) act on both the incoming and/or outgoing conversation, in this case in the language of the speaker to the translator user.

## Amended claims

### Amended claims under Art. 19.1 PCT

1. Simultaneous personal translator, especially designed so that the user of same can receive in their own language any message spoken in a different language, which incorporates a control model (6) assisted by a multiple language translation module (9) in such a way that said control module is capable of translating the oral message received by the translator in any of the languages (10'), (10"), ..., (10ⁿ) planned as complementary dictionaries in which said control module (6) is assisted by a module (7) for recognition and filtration of the dominant conversation near the device, a module (7) capable of distinguishing the predominant sound in the environment from other sounds and identifying the language to which said dominant conversation corresponds, and also assisted by a mobile phone module (8), in such a way that the translator acts simultaneously as a mobile phone, simultaneously translating the contents of any call, module (8) which has priority over module (7), for recognition and filtration; **characterised by** having the multiple language translation module (9) together with the dictionaries (10'), (10"), ..., (10ⁿ) which assist it, physically separate from the personal translation device (1) and located in a remote location, preferably an information supply centre (11), continuously accessible by various personal translators (1) through any suitable wireless communication system such as GSM, GPRS, UMTS or other

2. Simultaneous personal translator, according to claim 1, **characterised by** having the priority of module (7) for recognition and filtration of the direct and dominant conversation over module (8) of the mobile phone, and vice versa, selectable at will be the user of the simultaneous translator.

3. Simultaneous personal translator, according to previous claims, **characterised by** having the control module (6), through the multiple language translation module (9) act both on the incoming and/or outgoing conversation, in this case in the language of the person speaking to the user of the translator.
